# EUROPÄISCHE PATENTANMELDUNG

(11) **EP 1 647 324 A2**
(43) Veröffentlichungstag der Anmeldung: **19.04.2006**
(21) Anmeldenummer: 05108141.2
(22) Anmeldetag: 06.09.2005
(51) Int. Cl.: B01D 53/94, B01D 53/90, F01N 3/20, C01C 1/02

(54) **Verbesserte Aufbereitung von Hilfsstoffen zur NOx-Minderung**

(30) Priorität: 16.10.2004 DE 102004050763
(71) Anmelder: ROBERT BOSCH GMBH, 70442 Stuttgart (DE)
(72) Erfinder: BREUER, Norbert, 71254, Ditzingen (DE)

(57) **Zusammenfassung**

Zur Verringerung von Schadstoffen, insbesondere von Stickoxiden, in Abgasen (112, 118) von Verbrennungsmotoren (110) hat sich insbesondere das Verfahren der selektiven katalytischen Reduktion (SCR) bewährt. Dabei werden Stickoxide mittels gasförmigen Ammoniaks reduziert und in unschädlichen Stickstoff umgewandelt. Es werden daher ein Verfahren und eine Anordnung vorgeschlagen, mittels deren gasförmiger Ammoniak dynamisch zur Verfügung gestellt werden kann. Ein wesentliches Element der Erfindung ist ein Thermolyseraum (122), in welchem eine Ammoniak-Vorläufersubstanz (126) durch ein Einwirkung von elektromagnetischen Strahlen (130) thermolysiert wird. Dabei entsteht gasförmiger Ammoniak, welcher über ein Steuerventil (144) und eine Gasentnahmeleitung (124) in den Abgastrakt (114) eines Verbrennungsmotors (110) eingeleitet wird. Dabei wird die Strahlungsleistung P der elektromagnetischen Strahlungsquelle (128) mittels einer entsprechenden Regelung (150) derart gesteuert, dass die Thermolysereaktion derart verläuft, dass die Ammoniakproduktion dem augenblicklichen Bedarf B angepasst ist. Das beschriebene Verfahren und die beschriebene Anordnung gewährleisten, dass Energie effizient in jedem Betriebszustand des Verbrennungsmotors (110) gerade soviel Ammoniak zur Verfügung gestellt wird, wie benötigt wird. Die Anordnung stellt sich insbesondere schnell auf Lastschwankungen des Verbrennungsmotors (110) ein und liefert insbesondere auch in der kritischen Startphase des Verbrennungsmotors (110) schnell und zuverlässig Schadstoff reduzierendes Ammoniak.

## Beschreibung

### Technisches Gebiet

Die steigenden Anforderungen bezüglich der Emissionen von Verbrennungsmaschinen, insbesondere Verbrennungskraftmaschinen oder Verbrennungsmotoren, machen den Einsatz effizienter Abgasreinigungsverfahren notwendig. Ein bekanntes Verfahren zur Reduzierung von Stickoxiden (NOx) aus dem Abgas von mager betriebenen Motoren ist das SCR-Verfahren (selektive katalytische Reduktion). Hierbei werden die Stickoxide mit Ammoniak (NH₃) an geeigneten Katalysatoren reduziert.

### Stand der Technik

Für den Einsatz in Fahrzeugen wird versucht, die Speicherung und den Transport von NH₃ aus Sicherheitsgründen zu vermeiden. Hierzu können verschiedene Ausgangsstoffe im Kraftfahrzeug durch Thermolyse oder Hydrolyse unter Abspaltung von NH₃ umgewandelt werden. Bekanntester Vertreter dieses Verfahrensansatzes ist die Umwandlung einer wässrigen Harnstoff-Wasser-Lösung (AdBlue) mittels Hydrolyse.

Bei einem in der DE 196 51 212 C2 beschriebenen Verfahren wird Harnstoff mittels einer Laserquelle verdampft und anschließend der dampfförmige Harnstoff einem Abgassystem zugeleitet. Erst im Abgassystem findet die eigentliche Thermolyse des Harnstoffs statt, wobei unter anderem Ammoniak entsteht und mit den Abgasen reagieren kann. Nachteilig an diesem System ist jedoch, dass typischerweise technisch sehr aufwändige Lichtquellen, insbesondere Laser, eingesetzt werden müssen, was die Kosten des beschriebenen Systems stark erhöht.

Andere Stoffe, die durch Thermolyse umgesetzt werden können, benötigen kein Wasser für die NH₃-Freisetzung und sind deshalb aus prinzipiellen Überlegungen heraus an Bord eine Kraftfahrzeugs einfacher zu handhaben. Beispiele für dies Stoffe sind Ammoniumcarbamat, Ammoniumhydrogencarbonat und Ammoniumcarbonat. Wesentliche technische Aufgabe ist es, die für die Thermolyse notwendige Reaktionswärme im ausreichenden Maß zu Verfügung zu stellen.

In der DE 34 22 175 wird ein Verfahren beschrieben, bei dem durch eine Beimischung von Ammoniak zu saure Schadstoffe enthaltenden Abgasen die Schadenswirkung dieser Abgase herabgemindert werden kann. Dabei wird die wärmegesteuerte Erzeugung von NH₃ aus einem unter Ammoniakabgabe zerfallenden Salz beschrieben. Unter anderem werden auch elektrische Heizelemente sowie die Erhitzung des Salzes über Wärmestrahlung beschrieben.

Eine Variante dieses Verfahrens wird in der DE 197 20 209 beschrieben. Dabei wird die für die Thermolyse über die Behälterwand dem Ammoniumcarbamatvorrat zugeführt. Nachteil dieser Variante ist jedoch, dass nach Verbrauch einer gewissen Menge Ammoniumcarbamat ein Spalt zwischen dem Vorrat und Teilen der Wand entsteht, wodurch der Wärmeübertrag erheblich erschwert wird. In der EP 1 092 466 A2 wird daher eine Weiterbildung beschrieben, bei der dieser Nachteil durch Einsatz eines Andruckelements vermieden wird.

In der WO 02/055180 erfolgt die Wärmeübertragung mit Hilfe einer Wärmeträgerflüssigkeit, zum Beispiel eines Wärmeträgeröls. Hierdurch wird der Wärmeübertrag erheblich verbessert. Nachteilig an diesem Verfahren ist jedoch, dass sich ein Ölnebel bildet, welcher vor der Eindosierung des Ammoniaks in das Abgassystem abgetrennt werden muss. Dies bedeutet einen erheblichen Zusatzaufwand.

Wichtig für den erfolgreichen Einsatz eines auf Thermolyse einer NH₃-Vorläufersubstanz beruhenden Verfahrens ist, dass die NH₃-Freisetzung sehr dynamisch erfolgen muss. Dies bedeutet insbesondere, dass auf Bedarfsänderung (Lastschwankung) schnell reagiert werden muss und dass bei der Inbetriebnahme des Kraftfahrzeugs der NH₃-Generator schnell dem Bedarf folgen soll. Die bisher bekannten Verfahren genügen diesen Anforderungen nicht oder nur ungenügend. Dabei besteht insbesondere die Schwierigkeit, dass beim Start des Systems eine große thermische Masse auf Betriebstemperatur gebracht werden muss, bevor die NH₃-Freisetzung erfolgen kann. Die dabei zur Verfügung stehende Heizleistung ist beispielsweise durch die Auslegung des Bordnetzes eines Kraftfahrzeugs begrenzt, so dass die Bereitstellung der zur Aufheizung der wesentlichen Elemente benötigten Heizenergie eine nicht unbeträchtliche Startzeit erfordert. Während dieser Startzeit ist jedoch nur ein begrenzter NH₃-Fluss möglich, so dass die NOx-Minderung während dieser Phase nur stark eingeschränkt erfolgen kann.

### Darstellung der Erfindung

Das erfindungsgemäße Verfahren zur dynamischen Bereitstellung von Ammoniak zur Minderung von Stickoxiden in mageren Abgasen in einer seiner Varianten sowie die vorgeschlagene Anordnung zur Durchführung des Verfahrens vermeiden die im Stand der Technik auftretenden Nachteile. Durch geeignete Maßnahmen wird Ammoniak bereitgestellt, wobei die Bereitstellung insbesondere dem augenblicklichen Bedarf an Ammoniak angepasst ist.

Diese Vorteile werden insbesondere dadurch erzielt, dass eine direkte Einkopplung einer für die Thermolyse einer Ammoniak-Vorläufersubstanz benötigten Energiemenge mittels einer elektromagnetischen Strahlungsquelle erfolgt. Zu diesem Zweck wird eine Ammoniak-Vorläufersubstanz zunächst in einen Thermolyseraum eingebracht. Anschließend wird diese Ammoniak-Vorläufersubstanz durch Einwirkung elektromagnetischer Strahlen einer elektromagnetischen Strahlungsquelle mit einer Strahlungsleistung P im Thermolyseraum thermolysiert, wobei gasförmiger Ammoniak entsteht. Der gasförmige Ammoniak wird in die Abgase eingeleitet.

Bei der mindestens einen elektromagnetischen Strahlungsquelle kann es sich insbesondere um eine oder mehrere Lichtquellen handeln. Die elektromagnetische Strahlung kann sich vom UV-Bereich (ab ca. 100 nm) über den sichtbaren und infraroten Bereich bis hin in den Mikrowellenbereich erstrecken. Die Verwendung von Lichtquellen bereitet einen vergleichsweise geringen Aufwand und ist daher besonders vorteilhaft. Derartige Lichtquellen werden in verschiedener Ausführungsform bereits an unterschiedlichen Stellen im Fahrzeug (Scheinwerfer, Bremsleuchte, Fahrzeuginnenbeleuchtung) eingesetzt und sind entsprechend technisch ausgereift und für den Einsatz in Kraftfahrzeugen geeignet.

Die Verwendung einer Strahlungsquelle bewirkt insbesondere, dass keine Wärmeenergie, insbesondere zur Erwärmung eines Wandkörpers des Thermolyseraums, eingebracht werden muss. Zusätzlich lässt sich der Wärmeabfluss über die kalten Wände des Thermolyseraums erfindungsgemäß auch durch eine innen liegende thermische Isolationsschicht stark mindern. Dies führt insbesondere zu einer signifikanten Verkürzung der Startphase, sowie zu einer Verringerung parasitärer Energieverluste durch Wärmeleitung über die Wände des Thermolyseraums.

Da viele Ammoniak-Vorläufersubstanzen geringe Absorption, insbesondere geringe Absorption in dem von den meisten elektromagnetischen Strahlungsquellen verwendeten sichtbaren Spektralbereich, aufweisen, kann weiterhin die Ammoniak-Vorläufersubstanz zusätzlich eingefärbt werden. Dadurch wird die Absorption elektromagnetischer Strahlungsenergie durch die Ammoniak-Vorläufersubstanz weiter verbessert. Zusätzlich kann auch der Thermolyseraum mit mindestens einer weiteren, die elektromagnetische Strahlung reflektierenden Schicht ausgestattet sein, um den Energieverbrauch zusätzlich zu verringern und die Startdynamik des Systems zu verbessern.

Der Bedarf an Ammoniak ist insbesondere von der momentanen Stickoxid-Belastung der Abgase abhängig. Zur dynamischen Anpassung der Bereitstellung von Ammoniak an den momentanen Bedarf wird ein Regelalgorithmus vorgeschlagen, welcher die Thermolyserate der Thermolyse der Ammoniak-Vorläufersubstanz durch Regelung der Strahlungsleistung der elektromagnetischen Strahlungsquelle steuert. Als Eingangsgröße für den Regelalgorithmus werden dabei beispielsweise ein Druck p in dem mindestens einen Thermolyseraum und/oder eine Temperatur T in dem mindestens einen Thermolyseraum und/oder ein momentaner Ammoniakbedarf B verwendet. Der Bedarf an Ammoniak B kann beispielsweise über einen aktuellen Betriebszustand eines Motors oder über eine unmittelbare Messung einer momentanen Belastung der Abgase mit Stickoxiden ermittelt werden. Der Bedarf kann beispielsweise in Ammoniakvolumen pro Zeiteinheit oder Ammoniakmenge (beispielsweise Molmenge) pro Zeiteinheit bestimmt werden. Der generierte Ammoniak kann über mindestens ein Steuerventil und mindestens eine Gasleitung aus dem Thermolyseraum in einen Abgastrakt geleitet werden.

Der Regelalgorithmus kann insbesondere mindestens eine Steuergröße zur Regelung der Strahlungsleistung pro P der mindestens einen elektromagnetischen Strahlungsquelle generieren. Insbesondere kann es sich dabei um eine proportionale Steuergröße handeln, mittels derer die Strahlungsleistung der elektromagnetischen Strahlungsquelle proportional gesteuert wird. So kann beispielsweise der Regelalgorithmus so ausgestaltet sein, dass die Strahlungsleistung der elektromagnetischen Strahlungsquelle in jedem Augenblick proportional der gegenwärtigen Stickoxid-Belastung der Abgase folgt.

Weiterhin kann es sich auch um eine digitale Steuergröße handeln, bei der die Strahlungsleistung P der elektromagnetischen Strahlungsquelle durch An- und Abschalten erfolgt. Werden mehrere elektromagnetische Strahlungsquellen eingesetzt, so kann die Steuerung der Strahlungsleistung auch dadurch erfolgen, dass, je nach Bedarf an Ammoniak, zusätzliche elektromagnetische Strahlungsquellen hinzugeschaltet bzw. abgeschaltet werden. Weiterhin kann auch eine Ansteuerung der Strahlungsleistung dadurch erfolgen, dass elektromagnetische Strahlungsquellen getaktet an- und abgeschaltet werden. Hierbei lässt sich beispielsweise das bekannte Verfahren der Pulsweitenmodulation einsetzen. Es ist dabei anzumerken, dass unter Strahlungsleistung P hier verschiedene physikalische Größen verstanden werden können. Es kann sich insbesondere um eine momentane Strahlungsleistung der mindestens einen elektromagnetischen Strahlungsquelle oder auch um eine über einen vorgegebenen Zeitraum gemittelte Strahlungsleistung handeln. Auch ähnliche physikalische Größen lassen sich auswählen, beispielsweise eine Dosis einer in die Ammoniak-Vorläufersubstanz eingebrachten Strahlungsenergie, eine Intensität der Strahlungsleistung auf einer Oberfläche der Ammoniak-Vorläufersubstanz oder ähnliche Größen.

### Zeichnung

Anhand der Zeichnung wird im Folgenden die Erfindung näher erläutert.

Es zeigt:
- Figur 1: eine Anordnung zur dynamischen Bereitstellung von Ammoniak zur Minderung von Stickoxiden in mageren Abgasen; und
- Figur 2: ein Verfahren zur dynamischen Bereitstellung von Ammoniak zur Minderung von Stickoxiden in mageren Abgasen.

### Ausführungsvarianten

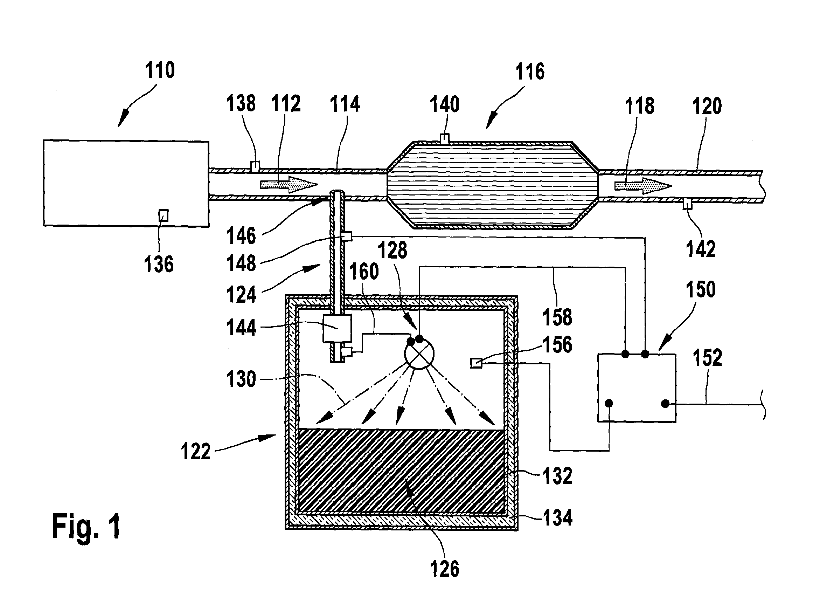

In Figur 1 ist eine bevorzugte Anordnung dargestellt, mittels derer Ammoniak zur Reduktion von Stickoxiden in Abgasen dynamisch bereitgestellt werden kann. Die Anordnung weist einen Verbrennungsmotor 110 auf, welcher einen Strom magerer Abgase 112 produziert. Dieser Abgasstrom 112 wird durch eine Abgasleitung 114 in einen für eine selektive katalytische Reduktion (SCR) geeigneten Katalysator 116 geleitet, wo die Schadstoffe im Abgasstrom 112 entsprechend vermindert werden. Anschließend wird der Abgasstrom mit verminderten Schadstoffen 118 über ein Auspuffsystem 120 in die Umgebungsluft geleitet.

Weiterhin weist die Anordnung eine Thermolysekammer 122 auf. Der Thermolysebehälter ist über eine Gasentnahmeleitung 124 mit der Abgasleitung 114 verbunden.

Ein Pressling einer Ammoniak-Vorläufersubstanz 126 ist in den Thermolysebehälter 122 eingebracht. Anstelle eines Presslings kann auch eine granulare Schüttung oder ein Pulver eingesetzt werden. Weiterhin weist der Thermolysebehälter eine steuerbare Lichtquelle 128 auf, welche elektromagnetische Strahlung 130 erzeugt. Die elektromagnetische Strahlung ist so ausgerichtet, dass es auf die Oberfläche des Presslings der Ammoniak-Vorläufersubstanz 126 auftrifft. Die Ammoniak-Vorläufersubstanz 126 absorbiert zumindest einen Teil dieser elektromagnetischen Strahlung und wird dadurch zumindest an ihrer Oberfläche soweit erwärmt, dass eine Thermolysereaktion und somit eine Freisetzung von gasförmigem Ammoniak stattfinden kann.

Die Vorläufersubstanz kann aus Ammoniumcarbamat, Ammoniumhydrogencarbonat, Ammoniumcarbonat sowie anderen durch Thermolyse Ammoniak freisetzende Substanzen sowie entsprechenden Substanzgemischen bestehen. Viele dieser Vorläufersubstanzen sind weiß, das heißt die Absorption der elektromagnetischen Strahlung 130 durch die Ammoniak-Vorläufersubstanz 126 ist vergleichsweise gering. Ein großer Teil der elektromagnetischen Strahlung 130 wird daher von der Oberfläche des Presslings 126 reflektiert. Da jedoch nur der absorbierte Strahlungsteil zur Erwärmung der Vorläufersubstanz 126 beiträgt, ist der Pressling der Ammoniak-Vorläufersubstanz zusätzlich durch entsprechende, auf die elektromagnetische Strahlungsquelle 128 angepasste Farbstoffe eingefärbt. Hierbei können entweder entsprechende herkömmliche Farbstoffe oder auch andere Feststoffe, wie zum Beispiel Ruß, eingesetzt werden.

Weiterhin kann der Verlust an elektromagnetischer Strahlungsenergie, welcher durch eine geringe Absorption der elektromagnetischen Strahlen 130 durch den Pressling der Ammoniak-Vorläufersubstanz 126 bzw. eine hohe Reflexion verursacht wird, durch eine wiederholte Reflexion der elektromagnetischen Strahlen 130 auf den Pressling 126 ausgeglichen werden. Zu diesem Zweck weist der Thermolysebehälter 122 auf seiner Innenwand eine strahlungsreflektierende Schicht 132 auf, welche die elektromagnetische Strahlung 130 reflektiert und somit eine Mehrfachreflexion der elektromagnetischen Strahlen 130 auf den Pressling 126 ermöglicht. Bei dieser strahlungsreflektierenden Schicht 132 kann es sich um eine Metallschicht handeln, welche auf die Innenseite des Thermolysebehälters 122 aufgedampft wird. Alternativ können auch separate Metallschichten, beispielsweise Wärmeisolationsfolien aus Metall, in den Thermolysebehälter 122 eingebracht werden.

Der Thermolysebehälter 122 weist vorzugsweise zusätzlich eine Wärmeisolationsschicht 134 auf. Diese Wärmeisolationsschicht 134 kann beispielsweise zwischen einer metallischen Wand des Thermolysebehälters 122 und der strahlungsreflektierenden Schicht 132 eingebracht sein. Alternativ kann jedoch auch der gesamte Thermolysebehälter 122 wärmeisolierend ausgelegt sein. Durch die Verwendung der Wärmeisolationsschicht 134 wird insbesondere in der Startphase des Motors 110, in der die elektromagnetische Strahlungsquelle 128 die Oberfläche des Presslings 126 zunächst aufwärmen muss, eine Verlustleistung infolge einer Erwärmung der Wand des Thermolysebehälters 122 reduziert. Dies führt zu einer deutlich verbesserten Startdynamik der Anordnung.

Als Wärmeisolationsschicht 134 können entweder einzelne Schichten oder Kombinationen mehrerer Schichten eingesetzt werden. Als Materialien bieten sich insbesondere Keramiken oder auch Kunststoffschichten, zum Beispiel Teflon (PTFE), an. Zwar weisen poröse Schichten hierbei eine erhöhte thermische Isolationswirkung auf. Es ist aber bei der Verwendung von porösen Materialien darauf zu achten, dass sich auf der Innenseite des Thermolysebehälters 122 keine offenporigen Oberflächen ausbilden. Ansonsten besteht die Gefahr, dass beim Starten der Anordnung zunächst Ammoniak in die offenen Poren der Wärmeisolationsschicht 134 diffundiert und dort zur Ammoniak-Vorläufersustanz (zum Beispiel Ammoniumcarbamat) zurückreagiert. Hierdurch würde ein Druckaufbau im Thermolysebehälter 122 erheblich verlangsamt, wodurch die Reaktionszeit der Anordnung beim Start des Motors 110 erheblich verschlechtert würde. Durch die Verwendung geschlossenporiger Oberflächen der thermischen Isolationsschicht 134 lässt sich diese Problematik vermeiden.

Im Fahrzeugbetrieb, also im Betrieb des Verbrennungsmotors 110, kommt es zu dynamischen Änderungen im NOx-Fluss im Abgasstrom 112. Diese dynamischen Änderungen des Stickoxidanteils in den Abgasen 112 lassen sich beispielsweise durch entsprechende Sensoren 136, 138, 140, 142 im Motor 110, in der Abgasleitung 114, im SCR-Katalysator 116 und/oder im Auspuffsystem 120 erfassen. Entsprechend der dynamischen Änderungen im Stickoxid-Fluss im Abgasstrom 112 bzw. 118 wechseln die Anforderungen an einen Ammoniak-Erzeuger zur Stickoxidreduktion ständig. Vorteilhafterweise ist daher der Thermolysebehälter 122 als Druckbehälter ausgeführt. Idealerweise steht dabei das gasförmige Ammoniak im Thermolysebehälter 122 unter einem Überdruck (d. h. Druck über Normaldruck) von 0,5 bis 3 bar. Über ein steuerbares Gasventil 144 wird dann jeweils die benötigte Menge des unter Druck stehenden Ammoniaks über die Gasentnahmeleitung 124 in die Abgasleitung 114 geleitet. Der Ort der Einleitung 146 in die Abgasleitung 114 ist dabei so gewählt, dass die Einleitung des Ammoniaks in den Abgasstrom 112 unmittelbar vor dem SCR-Katalysator 116 erfolgt. Die Einleitungsstelle 146 ist zusätzlich in ihrer Lage und ihrer Form derart optimiert, dass sich der Ammoniak optimal mit dem Abgasstrom 112 vermischen kann, bevor der Abgasstrom 112 in den SCR-Katalysator 116 eintritt. Auf diese Weise lässt sich die Schadstoffreduktion zusätzlich optimieren. Der Ammoniak-Strom durch die Gasentnahmeleitung 124 kann durch einen zusätzlichen Strömungs- oder Drucksensor 148 überwacht und mittels des Gasventils 144 eingestellt werden. Das Gasventil 144 kann beispielsweise als getaktetes Ventil oder als Dosierventil ausgeführt sein.

Bei zeitlich veränderlichen Ammoniak-Strömen sollte auch die Energiezufuhr im Thermolysebehälter 122 entsprechend zeitlich geregelt werden. Dadurch lassen sich starke Druckschwankungen im Thermolysebehälter 12 vermeiden, beispielsweise indem, wenn augenblicklich ein geringerer Bedarf an Ammoniak vorhanden ist, entsprechend die Energiezufuhr reduziert wird und dadurch die chemische Thermolysereaktion verringert wird.

Zum Zweck der dynamischen Bereitstellung von Ammoniak wird daher die Strahlungsleistung der elektromagnetischen Strahlungsquelle 128 mittels eines Steuergeräts 150 über eine Steuerleitung 158 geregelt. Dieses Steuergerät 150 bietet einerseits die Möglichkeit, die Strahlungsleistung entsprechend dem momentanen Ammoniak-Bedarf B zu regeln. Zu diesem Zweck wird das Steuergerät 150 über eine Steuerleitung für den Ammoniakbedarf 152 mit einer Information über den aktuellen Bedarf B an Ammoniak versorgt. Diese Information kann beispielsweise von einem Motorsteuerungsgerät generiert werden, insbesondere unter Berücksichtigung der Signale der NOx-Sensoren 136, 138, 140 und 142. Auf diese Weise kann das Steuergerät 150 die Strahlungsleistung der elektromagnetischen Strahlungsquelle 128 dem momentanen Ammoniak-Bedarf anpassen.

Alternativ ist es auch möglich, die Strahlungsleistung der elektromagnetischen Strahlungsquelle 128 mittels des Steuergeräts 150 so zu regeln, dass der Druck des Ammoniaks im Thermolysebehälter 122 konstant gehalten oder innerhalb eines bestimmten vorgegebenen Druckbereichs gehalten wird. Sinkt beispielsweise bei einer verstärkten Entnahme von Ammoniak der Druck im Thermolysebehälter 122, so kann durch eine Steigerung der Strahlungsleistung der elektromagnetischen Strahlungsquelle 128 die Thermolyse verstärkt werden, wodurch wiederum der Druck im Thermolysebehälter 122 erhöht wird. Entsprechend kann durch eine geeignete Regelung durch das Steuergerät 150 der Druck im Thermolysebehälter 122 konstant gehalten werden. Anstelle eines Drucks im Thermolysebehälter kann auch eine Temperatur als Regelgröße für das Steuergerät 150 verwendet werden. Zu diesem Zweck sind einer oder mehrere Druck- und/oder Temperatursensoren 156 im Thermolysebehälter 122 vorgesehen, deren Informationen vom Steuergerät 150 ausgewertet und zur Regelung verwendet werden können. Auch eine Kombination der beschriebenen Regelmechanismen (Druck p, Temperatur T, Ammoniak-Bedarf B) kann zur Regelung eingesetzt werden. Insbesondere kann der Regelalgorithmus des Steuergeräts 150 zur Steuerung der elektromagnetischen Strahlungsquelle 128 auch zeitlich veränderbar sein, so dass beispielsweise zu verschiedenen Zeiten nach Start des Verbrennungsmotors 110 unterschiedliche Regelalgorithmen eingesetzt werden können.

Die Regelung der elektromagnetischen Strahlungsquelle 128 durch das Steuergerät 150 über die Steuerleitung 158 kann, je nach Ausgestaltung der elektromagnetischen Strahlungsquelle 128, über verschiedene Wege erfolgen. Einerseits kann die Strahlungsleistung der elektromagnetischen Strahlungsquelle 128 bei entsprechenden Strahlungsquellen einfach über einen Leistungssteller, beispielsweise einen in das Steuergerät 150 integrierte variable elektrische Energiequelle, erfolgen. Alternativ kann bei Verwendung mehrerer Strahlungsquellen 128 jeweils ein Ensemble von Strahlungsquellen 128 geeigneter Leistung ein- bzw. ausgeschaltet werden. In einer weiteren alternativen Ausführungsform werden die Strahlungsquellen 128 getaktet eingeschaltet, wobei die Leistungseinstellung zum Beispiel über eine Pulsweitenmodulation erfolgt. Auch eine Kombination der oben genannten Alternativen ist denkbar.

Bei der Verwendung einiger Ammoniak-Vorläufersubstanzen 126 (zum Beispiel Ammoniumcarbamat) erfolgt die Thermolysereaktion reversibel, das heißt beim Abkühlen des Thermolysebehälters 122 oder an kalten Stellen innerhalb des Thermolysebehälters 122 kann es zur Ausbildung von entsprechenden Ablagerungen kommen. Derartige Ablagerungen sind insbesondere in der Gasentnahmeleitung 124, im Gasventil 144 oder in der Abgasleitung 114 nachteilig, da sie einen Gasstrom behindern können und aufwendige Reinigungsarbeiten erforderlich machen können. In der in Figur 1 dargestellten Ausführung sind daher das Gasventil 144 sowie die Gasentnahmeleitung 124 elektrisch beheizbar ausgestaltet. Alternativ oder zusätzlich, wie auch in dem in Figur 1 dargestellten Ausführungsbeispiel, ist das Gasventil 144 innerhalb des Thermolysebehälters 122 angeordnet. Das Gasventil 144 wird dabei entweder unmittelbar von der von der elektromagnetischen Strahlungsquelle 128 ausgesandten elektromagnetischen Strahlung 130 aufgeheizt oder indirekt über Reflexionen bzw. Abstrahlungen von der Ammoniak-Vorläufersubstanz 126 oder über die Wände des Thermolysebehälters 122. Auf diese Weise wird das Ventil 144 auf eine Temperatur gebracht, bei der das Ausfallen von Ammoniak-Vorläufersubstanz, insbesondere von Ammoniumcarbamat, vermieden wird.

Die elektrische Heizung der Gasentnahmeleitung 124 und/oder des Gasventils 144 kann auch beispielsweise durch eine elektrische Reihenschaltung mittels einer elektrischen Verbindungsleistung 160 zur Strahlungsquelle 128 erfolgen. Hierdurch werden insbesondere elektrische Durchführungen in den druckfesten Thermolysebehälter 122 eingespart. Außerdem ist insbesondere beim Start der Ammoniakerzeugung eine hohe Heizleistung sowohl zum Aufbau eines erforderlichen Betriebsdrucks im Thermolysebehälter 122 durch die elektromagnetische Strahlungsquelle 128 als auch zur Entfernung von Feststoffablagerungen im Gasventil 144 und in der Gasentnahmeleitung 124 erforderlich.

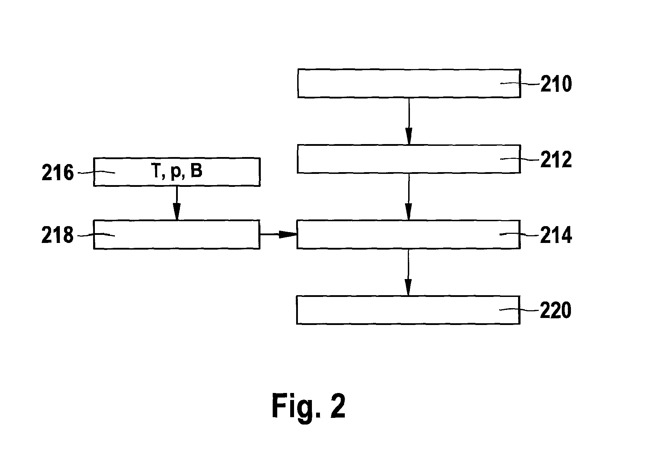

In Figur 2 ist ein bevorzugtes Verfahren zur dynamischen Bereitstellung von Ammoniak zur Stickoxidreduktion in Abgasen dargestellt, welches beispielsweise mit der in Figur 1 dargestellten Anordnung durchgeführt werden kann. Die dargestellten Verfahrensschritte müssen nicht notwendigerweise in der angegebenen Reihenfolge ausgeführt werden, sondern können beispielsweise auch parallel durchgeführt werden. Auch zusätzliche, in Figur 2 nicht dargestellte Verfahrensschritte können durchgeführt werden.

In Schritt 210 wird zunächst ein entsprechender Pressling (bzw. eine Schüttung, Pulver etc., s. o.) der Ammoniak-Vorläufersubstanz 126 hergestellt. Dabei wird zunächst die Ammoniak-Vorläufersubstanz 126 mit einem geeigneten Farbstoff oder Ruß eingefärbt und schließlich zu einem Pressling geformt. Anstelle eines einzelnen Presslings können auch mehrere Presslinge eingesetzt werden. Auch die Formgestaltung der Oberfläche des Ammoniak-Vorläufersubstanz-Presslings 126 kann entsprechend optimiert werden, beispielsweise durch eine Aufrauung, um den Ablauf der Thermolysereaktion zu optimieren und entsprechend die für die Thermolyse benötigte Energiemenge zu minimieren.

In Schritt 212 wird dann der in Schritt 210 hergestellte Pressling 126 in den Thermolysebehälter 122 eingebracht. Anschließend wird in Schritt 214 die Bestrahlung der Ammoniak-Vorläufersubstanz 126 durch die elektromagnetische Strahlungsquelle 128, entsprechend des Betriebszustandes des Verbrennungsmotors 110 gestartet, wobei sich thermolytisch Ammoniak im Thermolysebehälter 122 bildet.

Dabei werden in Schritt 216 ständig die Temperatur T und der Druck p im Thermolysebehälter 122, sowie ein entsprechender momentaner Bedarf B an Ammoniak erfasst. Die Größen T, p, B werden in Schritt 218 mittels eines entsprechenden Regelalgorithmus verarbeitet und dementsprechend, wie oben beschrieben, die Strahlungsleistung der elektromagnetischen Strahlungsquellen 128 und somit der Ablauf der Thermolysereaktion im Thermolysebehälter 122, gesteuert.

Der bei der Thermolysereaktion in Schritt 214 entstehende Ammoniak wird in Schritt 220, gesteuert durch das Gasventil 144, über die Gasentnahmeleitung 124 aus dem Thermolysebehälter 122 ausgeleitet und an der Einleitungsstelle 146 in die Abgasleitung 114 eingeleitet.

### Bezugszeichenliste

- 110: Verbrennungsmotor
- 112: Abgasstrom
- 114: Abgasleitung
- 116: SCR-Katalysator
- 118: schadstoffverminderter Abgasstrom
- 120: Auspuffsystem
- 122: Thermolysebehälter
- 124: Gasentnahmeleitung
- 126: Pressling Ammoniak-Vorläufersubstanz
- 128: elektromagnetische Strahlungsquelle
- 130: elektromagnetische Strahlung
- 132: strahlungsreflektierende Schicht
- 134: thermische Isolationsschicht
- 136: NOx-Sensor
- 138: NOx-Sensor
- 140: NOx-Sensor
- 142: NOx-Sensor
- 144: Gasventil
- 146: Einleitungsstelle
- 148: Strömungs- oder Drucksensor
- 150: Steuergerät zur Regelung der Strahlungsquelle 128
- 152: Steuerleitung für Ammoniak-Bedarf
- 156: Druck- und Temperatursensor
- 158: Steuerleitung
- 160: Verbindungsleitung

- 210: Anfärben der Ammoniak-Vorläufersubstanz und Herstellung des Presslings 126
- 212: Einbringen der Ammoniak-Vorläufersubstanz 126 in den Thermolysebehälter 122
- 214: Bestrahlung der Ammoniak-Vorläufersubstanz 126
- 216: Erfassung von Druck, Temperatur und Ammoniak-Bedarf
- 218: Regelalgorithmus zur Regelung der Bestrahlungsleistung der elektromagnetischen Strahlungsquelle 128
- 220: Einleiten Ammoniak in den Abgastrakt 114

## Patentansprüche

1. Verfahren zur dynamischen Bereitstellung von Ammoniak zur Minderung von Stickoxiden in Abgasen (112, 118) mit folgenden Schritten:
a) eine Ammoniak-Vorläufersubstanz (126) wird in einen Thermolyseraum (122) eingebracht;
b) durch Einwirkung elektromagnetischer Strahlen (130) einer elektromagnetischen Strahlungsquelle (128) mit einer Strahlungsleistung P wird die Ammoniak-Vorläufersubstanz (126) im Thermolyseraum (122) thermolysiert, wobei gasförmiger Ammoniak entsteht; und
c) der gasförmige Ammoniak wird in die Abgase (112, 118) eingeleitet.

2. Verfahren nach dem vorhergehenden Anspruch mit zusätzlich folgendem Schritt:
d) die Ammoniak-Vorläufersubstanz (126) wird zur Erhöhung der Absorption der elektromagnetischen Strahlen (130) mit einem geeigneten Absorptionsmittel, insbesondere einem Farbstoff oder Ruß, versetzt.

3. Verfahren nach einem der vorhergehenden Ansprüche,
**dadurch gekennzeichnet,**
**dass** in Schritt b) die Strahlungsleistung P durch einen Regelalgorithmus geregelt wird,
- wobei der Regelalgorithmus von mindestens einer Eingangsgröße abhängig ist; und
- wobei als mindestens eine Eingangsgröße ein Druck p in dem mindestens einen Thermolyseraum (122) und/oder eine Temperatur T in dem mindestens einen Thermolyseraum (122) und/oder ein momentaner Ammoniakbedarf B verwendet wird.

4. Verfahren nach dem vorhergehenden Anspruch,
**dadurch gekennzeichnet,**
**dass** der Regelalgorithmus mindestens eine der folgenden Steuergrößen zur Regelung der Strahlungsleistung P generiert:
- eine proportionale Steuergröße zur proportionalen Ansteuerung der Strahlungsleistung P der elektromagnetischen Strahlungsquelle (128); und/oder
- eine eine digitale Steuergröße zur digitalen Ansteuerung der Strahlungsleistung P durch An- und Abschalten einer oder mehrerer elektromagnetischer Strahlungsquellen (128); und/oder
- eine Steuergröße zur Ansteuerung einer mittleren Srahlungsleistung P durch zeitlich getaktetes An- und Abschalten mindestens einer elektromagnetischer Strahlungsquelle (128) (Pulsweitenmodulation).

5. Anordnung zur dynamischen Bereitstellung von Ammoniak zur Minderung von Stickoxiden in Abgasen (112, 118) mit
a) einem Abgastrakt (114, 116, 120);
b) mindestens einem Thermolyseraum (122) zur Aufnahme einer Ammoniak-Vorläufersubstanz (126);
c) mindestens einer elektromagnetischen Strahlungsquelle (128) zur Bestrahlung der Ammoniak-Vorläufersubstanz (126) mit elektromagnetischen Strahlen (130) mit einer Strahlungsleistung P; und
d) mindestens einer Gasleitung (124) zur Einleitung gasförmigen Ammoniaks aus dem mindestens einen Thermolyseraum (122) in den Abgastrakt (114).

6. Anordnung nach dem vorhergehenden Anspruch,
**dadurch gekennzeichnet,**
**dass** der mindestens eine Thermolyseraum (122) mindestens eine innenliegende thermische Isolationsschicht (134) aufweist.

7. Anordnung nach dem vorhergehenden Anspruch,
**dadurch gekennzeichnet,**
**dass** die mindestens eine innenliegende thermische Isolationsschicht (134) mindestens eine keramische Schicht und/oder mindestens eine Kunststoffschicht aufweist.

8. Anordnung nach einem der beiden vorhergehenden Ansprüche,
**dadurch gekennzeichnet,**
**dass** die mindestens eine thermische Isolationsschicht (134) Poren aufweist,
- wobei die Poren derart ausgestaltet sind, dass die mindestens eine thermische Isolationsschicht (134) zum Innenraum des mindestens einen Thermolyseraums (122) hin geschlossenporig ist.

9. Anordnung nach einem der vorhergehenden Anordnungsansprüche,
**dadurch gekennzeichnet,**
**dass** der mindestens eine Thermolyseraum (122) mindestens eine Schicht (132) zur Reflexion der elektromagnetischen Strahlen (130) aufweist.

10. Anordnung nach dem vorhergehenden Anspruch,
**dadurch gekennzeichnet,**
**dass** die mindestens eine Schicht (132) zur Reflexion elektromagnetischer Strahlen eine auf die mindestens eine thermische Isolationsschicht (134) aufgebrachte Metallschicht aufweist.

11. Anordnung nach einem der vorhergehenden Anordnungsansprüche mit zusätzlich
e) mindestens einem Steuerventil (144) zur Steuerung der Einleitung des gasförmigen Ammoniaks aus dem mindestens einen Thermolyseraum (122) in den mindestens einen Abgastrakt (114) durch die mindestens eine Gasleitung (124).

12. Anordnung nach dem vorhergehenden Anspruch,
**dadurch gekennzeichnet,**
**dass** mindestens ein Steuerventil (144) im Inneren des mindestens einen Thermolyseraums (122) angeordnet ist.
